Europäisches Patentamt

European Patent Office

Office européen des brevets

(11) Veröffentlichungsnummer : **0 076 443**
**B1**

(12) EUROPÄISCHE PATENTSCHRIFT

(45) Veröffentlichungstag der Patentschrift :
03.12.86

(51) Int. Cl.⁴ : **C 09 D   3/16**

(21) Anmeldenummer : 82108873.9

(22) Anmeldetag : 25.09.82

(54) Verfahren zur Herstellung von wässriger Überzugsemulsion aus zähflüssigen cellulosehaltigen Gemischen (Pasten).

(30) Priorität : 07.10.81 DE 3139840

(43) Veröffentlichungstag der Anmeldung :
13.04.83 Patentblatt 83/15

(45) Bekanntmachung des Hinweises auf die Patenterteilung : 03.12.86 Patentblatt 86/49

(84) Benannte Vertragsstaaten :
AT BE DE FR GB IT NL SE

(56) Entgegenhaltungen :
DE-A- 1 922 411
DE-C-   540 723
DE-C-   918 286
GB-A- 1 426 727
NL-A- 6 602 026

(73) Patentinhaber : Wolff Walsrode Aktiengesellschaft
Postfach
D-3030 Walsrode 1 (DE)

(72) Erfinder : Lühmann, Erhard
Hans-Böckler-Strasse 26
D-3036 Bomlitz 1 (DE)
Erfinder : Hoppe, Lutz, Dr.
Am Badeteich 8
D-3030 Walsrode 1 (DE)
Erfinder : Szablikowski, Klaus, Dr.
Claudiusstrasse 5
D-3030 Walsrode 1 (DE)
Erfinder : Lampert, Friedrich-Karl
An der Warnau 16
D-3036 Bomlitz 2 (DE)

(74) Vertreter : Kutzenberger, Helga, Dr. et al
c/o Bayer AG Konzernverwaltung RP Patentabteilung
D-5090 Leverkusen, Bayerwerk (DE)

**Beschreibung**

Es ist bekannt, wässrige Überzugsmittel auf Basis von Celluloseester herzustellen.

So wird in der DOS 2 203 554 die Herstellung von Nitrocelluloselackemulsion beschrieben, die einen Feststoffgehalt von 13 Gew.-% bis 16,6 Gew.-% und einen Lösungsmittelanteil von 37,6 Gew.-% bis 44,2 Gew.-% aufweisen.

Die Konzentrationsverhältnisse Feststoff zu Lösungsmittel sind immer kleiner als eins und entsprechen den üblichen Konzentrationsverhältnissen (s. DOS 2 203 554, Seite 5, 1. Absatz mit Hinweis A. Kraus, Handbuch der Nitrocelluloselacke, Verlag W. Pansegrau, Berlin-Wilmersdorf, 1952).

Der hohe Lösungsmittelanteil wird als notwendig angesehen, da man nach den üblichen mechanischen Emulgiertechniken (s. DOS 2 203 554, Seite 5, 1. Absatz) eine niedrig viskose organische Phase, die die Lackkomponenten enthält, zur Erzielung einer lagerstabilen Emulsion für erforderlich hält. Man war der Ansicht, daß sich die organische Phase nicht in die notwendige Tröpfchenform emulgieren läßt, wenn sie zähflüssig oder pastenförmig ist (A. Kraus, Zentralblatt 1940, S. 225, 225).

Dies gilt auch für die Lehre der DE-PS 918 286. Nach diesem Stand der Technik wird es als notwendig angesehen, daß die Nitrocellulose nur dann in Wasser unter Rühren emulgierbar ist, wenn sie in großen Mengen Lösungsmitteln aufgelöst ist. Aus Seite 2 der DE-PS 918 286 geht hervor, daß bei Verwendung kleiner Lösungsmittelmengen keine stabilen Emulsionen erhalten werden.

Ebenso wird in der NL-A-6 602 026 gelehrt, daß nur Nitrocellulose, gelöst in einem großen Überschuß eines organischen Lösungsmittels, bei dem das Feststoff zu Lösungsmittelverhältnis ≥ 1 liegt, zur Herstellung von wäßrigen Überzugsdispersionen geeignet ist.

Um diesen Nachteil zu vermeiden, wurde versucht, die Lackkomponenten in einem Überschuß an organischen Lösungsmitteln zu lösen, dann in Wasser zu emulgieren und anschließend das organische Lösungsmittel wieder völlig oder teilweise abzudestillieren (DOS 2 703 075, DAS 1 286 672). Nachteilig bei diesem Verfahren ist, daß es aufwendig und sehr kostenintensiv ist.

Überraschenderweise wurde nun gefunden, daß durch den Einsatz zähflüssiger, cellulosehaltiger Pasten auf direktem Weg lösungsmittelarme und feststoffreiche, wässrige Celluloselackemulsionen hergestellt werden können, selbst wenn das Verhältnis Feststoff zu Lösungsmittel vor dem Emulgieren in Wasser größer oder gleich 1 ist.

Dabei ist überraschend, daß eine lagerstabile Emulgierung der organischen Phase in Wasser ohne Einwirkung größere Scherkräfte und bei niedrigen Temperaturen (bis höchstens 45 °C) erreicht wird.

Gegenstand der Erfindung sind daher Verfahren zur Herstellung lagerstabiler, wäßriger Überzugsmittelemulsionen des Öl-in-Wasser-Types, deren organische Lösungsmittelkonzentration höchstens 25 % beträgt, auf der Grundlage eines zähflüssigen, cellulosehaltigen Gemisches oder Paste, die aus

a) 5,0-60 Gew.-% vorzugsweise 15-45 Gew.-% Cellulosesubstanz
b) 0-55 Gew.-% vorzugsweise 0-35 Gew.-% Harzen
c) 0,5-55 Gew.-% vorzugsweise 1-30 Gew.-% Weichmacher
d) 0-20 Gew.-% vorzugsweise 0-12,5 Gew.-% Emulgatoren
e) 0-45 Gew.-% vorzugsweise 5-35 Gew.-% wenigstens eines organischen Lösungsmittels
f) 0-30 Gew.-% vorzugsweise 5-25 Gew.-% Wasser

besteht, und wobei die Summe aus a) - f) immer 100 Gew.-% ergeben muß, dadurch gekennzeichnet, daß man in das cellulosehaltige Gemisch oder in die Paste, deren Weichmacherkomponente zu 0,5-100 Gew.-% aus wenigstens einem ethoxylierten Weichmacher besteht und deren Verhältnis Feststoff zu organischer Lösungsmittel-Phase größer oder gleich 1 ist, ohne weitere Verdünnung durch ein organisches Lösungsmittel direkt unter Einhaltung von Temperaturen von höchstens 45 °C Wasser in solchen Mengen einarbeitet, daß die Konzentrationen des organischen Lösungsmittels höchstens 25 % beträgt.

Vorzugsweise wird das Wasser der organischen Phase tropfenweise zugegeben.

Als Cellulosesubstanz eignen sich vorzugsweise Celluloseester, insbesondere Nitrocellulose aller Viskositätsstufen oder plastifizierte Nitrocellulose oder deren Mischungen.

Ganz besonders geeignet ist Nitrocellulose, beispielsweise die üblichen Collodiumwollequalitäten, d. h., Cellulosesalpetersäureester mit einem Stickstoffgehalt von 10,2 bis 12,4 Gew.-%.

Als Weichmacher können die üblichen Weichmacher wie z. B. die Ester von aliphatischen Monocarbonsäuren, vorzugsweise mit $C_2$-$C_{18}$ wie Cetylacetat, Glykoldiacetat, Stearate, Ricinolacetate, Dicarbonsäuren, wie z. B. der Dioctyladipat, Dimethylcyclohexylmethyladipat, Dibutylsebacat : aromatischen Dicarbonsäuren, wie z. B. Dibutylphtalat, Dioktylphtalat, Dicyclohexylphtalat, aliphatischen Tricarbonsäuren, vorzugsweise mit $C_8$, von aromatischen Dicarbonsäuren und von einwertigen Alkoholen mit $C_2$-$C_{10}$, von zweiwertigen Alkoholen mit $C_2$-$C_6$ und dreiwertigen Alkoholen mit $C_3$ oder die Ester von anorganischen Säuren wie z. B. Tributylphosphat, Triphenylphosphat ; sowie Sulfonamide. Öle wie Rizinusöl und Leinöl und die Alkoxylierungsprodukte der genannten Verbindungen, wie z. B. ethoxylierte Rizinusöle und Sojaöle, Stearate und Phosphorsäureester eingesetzt werden.

Ganz besonders geeignet sind die Ethoxylierungsprodukte von Weichmachern, wie z. B. ethoxylierte Rizinusöle und Sojaöle.

Als Emulgatoren können gegebenenfalls anionische Emulgatoren, beispielsweise langkettige Alkylarylsulfonate, wie Dodecylbenzol- oder Butylnaphthalinsulfonat, Alkylsulfate, wie Lauryl- oder Stearylalkoholsulfate, Sulfobernsteinsäureester, wie Dioctyldinatriumsuccinat, oder nichtionogene Emulgatoren, wie Octyl- oder Nonylphenoloxethylate mit einem Oxethylierungsgrad von zweckmäßigerweise 4 bis 14 mitverwendet werden. Bevorzugt werden ethoxylierte Verbindungen eingesetzt.

Zur Herstellung der organischen Phase kommen auch alle üblichen organischen Lösungsmittel in Betracht.

Vorzugsweise werden Acetate, wie Ethylacetat, Isopropylacetat, Butylacetat, 2-Ethylhexylacetat, Methoxy-n-butyl-acetat, Ethylglykolacetat und Butylglykolacetat, Ketone wie Aceton, Methylisobutylketon, Diisobutylketon, 2-Cyclohexylhexanon, Methylisoamylketon, Isophoron, niedrige Alkohole wie Butanol verwendet.

Der Celluloselösung können noch weitere übliche Harze, wie z. B. Alkyd-, Maleinsäure-, Phenol-, Formaldehyd-, Xylol-Formaldehyd-, Keton-, Sulfonamid-, Aldehyd-, Amin-, Epoxy-, Carbamidsäureester-, Kumaron-Inden-Harze, Ester der Saccharose, Vinyl-, Acrylat- und deren Copolymerisationsharze zugesetzt werden.

Die Überzugsmittelemulsionen werden so hergestellt, indem man die Cellulosesubstanz, den Weichmacher und gegebenenfalls einen oder mehrere Emulgatoren und weitere Harze, gegebenenfalls unter Verwendung eines organischen Lösungsmittels oder Lösungsmittelgemisches, ineinander löst und in das erhaltene zähflüssige cellulosehaltige Gemisch oder in die Paste unter Einhaltung von Temperaturen von höchstens 45 °C, vorzugsweise höchstens 40 °C, Wasser, vorzugsweise tropfenweise, hinzugibt.

Je nach Anwendungsgebiet (z. B. Holz-, Metall-, Kunststoff-, Papier-, Leder-, Glas- und Folienlackierungen) können noch weitere bekannte organische Lösungsmittel der Emulsion zugesetzt werden, wobei eine Lösungsmittelkonzentration von 25 %, bezogen auf die Endlackformulierung, nicht überschritten werden darf. Ferner können der Emulsion, vorzugsweise der wässrigen Phase, auch solche Stoffe zugesetzt werden, die die Verarbeitung oder anwendungstechnischen Eigenschaften verbessern, wie z. B. Gleitmittel, Glanzverbesserungsmittel, Antischaummittel, Schleifbarkeits-Verbesserungsmittel, Verlaufmittel, Stabilisatoren, Lichtschutzmittel und Farbstoffe.

Die gemäß der Erfindung hergestellten wässrigen Überzugsmittelemulsionen weisen einen sehr guten Verlauf, hohen Glanz und gute Lagerbeständigkeit auf. Entsprechend der Anwendung formulierten Lackzusammensetzung können z. B. ausgezeichnete Alkohol- und Wasserbeständigkeiten oder Naßreibechtheiten aufweisen. Die äußerst wirtschaftlichen, umweltfreundlichen, lösungsmittelarmen Emulsionen sind in ihren anwendungstechnischen Eigenschaften den nur aus organischen Lösungsmitteln hergestellten konventionellen Lacken vergleichbar.

## Beispiel 1

In einer Lösung von

55,9 g Butylglykolacetat
5,5 g ethoxyliertem Nonyphenol mit einem Ethoxylierungsgrad (EO) von 12
4,7 g ethoxyliertem Rizinusöl mit einem Ethoxylierungsgrad (EO) von 80
1,0 g Dibutylphtalat
50,0 g Erdnußölfettsäurealkydharz (Ölgehalt von ca. 41 %)

wurden

55,0 g Nitrocellulose (NC), Norm 24 E (in Form von 35,75 g trockener NC und 19,25 Wasser) eingearbeitet und bei 30 °C homogenisiert. Bei langsam laufendem Rührwerk wurden bei 30 °C tropfenweise
108,9 g Wasser eingerührt.

Es entstand eine 35 %ige lagerstabile Emulsion mit einem Lösungsmittelanteil von 20 % (Feststoff : Lösungsmittel = 1,75 : 1).

Die Durchlaufzeit betrug im DIN-4-Becher 12,1 sec.

71,4 g der 35 %igen Emulsion wurden mit
28,6 g Wasser verdünnt.

Es entstand eine 25 %ige Emulsion mit einem Lösungsmittelgehalt von 14,3 %.

Diese Emulsion wurde anschließend mittels einer Spritzpistole auf eine Holzoberfläche aufgebracht (3 Spritzgänge à 70 g/m² Emulsion, Trocknungstemperatur 23 °C).

Die Prüfungsbedingungen un die erhaltenen Wasser- und Alkoholbeständigkeiten sind in der Tabelle 1 zusammengefaßt.

## Beispiel 2

Dieses Beispiel soll zeigen, daß NC-haltige Emulsionen mit separat emulgierten Lackrohstoff-Emulsionen mischbar sind und gleiche anwendungstechnische Eigenschaften wie Emulsionen aufweisen, in welchen alle Lackrohstoffe zusammen emulgiert wurden.

### Emulsion a

In eine Lösung von

27,3 g Butylglykolacetat
7,3 g ethoxyliertem Nonylphenol mit einem EO von 12
3,7 g ethoxyliertem Rizinusöl mit einem EO von 80
1,0 g Dibutylphtalat

wurden

55,0 g Nitrocellulose, Norm 24 E (in Form von 35,75 g trockener NC und 19,25 Wasser) eingearbeitet und homogenisiert.
Unter Rühren wurde bei 30 °C tropfenweise
42,1 g Wasser eingerührt.
Es entstand eine 35 %ige lagerstabile Emulsion mit einem Lösungsmittelanteil von 20 %.
(Feststoff : Lösungsmittel = 1,75 : 1).

### Emulsion b

In 28,6 g Butylglykolacetat wurden

50,0 g Erdnußölfettsäurealkydharz (Ölgehalt von ca. 41 %)
2,0 g ethoxyliertem Nonyphenyl mit einem EO von 12
1,0 g ethoxyliertem Rizinusöl mit einem EO von 80

gelöst und unter Rühren bei 30 °C

66,8 g Wasser tropfenweise zugegeben. Es entstand eine lagerstabile 35 %ige Dispersion mit einem Lösungsmittelanteil von 20 %.

136,4 g der Emulsion a wurden mit
148,4 g der Emulsion b und
193,2 g Wasser vermischt.

Es entstand eine 25 %ige Emulsion mit einem Lösungsmittelanteil von 14 % (Feststoff : Lösungsmittel = 1,79 : 1).
Die Auslaufzeit im DIN-4-Becher betrug 11,8 sec.
Diese Emulsion wurde anschließend mittels einer Spritzpistole auf eine Holzoberfläche aufgebracht (3 Spritzgänge à 70 g/m² Emulsion, Trocknungstemperatur 23 °C).
Die Prüfungsbedingungen und die erhaltenen Wasser- und Alkoholbeständigkeiten sind in der Tabelle 1 zusammengefaßt.

## Beispiel 3

In eine Lösung von

6,0 g ethoxyliertem Rizinusöl mit einem EO von 33
9,0 g ethoxyliertem Nonylphenyl mit einem EO von 12
4,5 g Dibutylphtalat
4,5 g Benzylbutylphtalat
40,0 g Erdnußölfettsäurealkydharz (Ölgehalt ca. 43 %)
8,0 g 10 %ige wässrige NaOH-Lösung
32,5 g Malinatharz
34,0 g Harnstoffharz (60 %ig in Butanol) und
89,2 g Butylglykolacetat wurden
97,0 g Nitrocellulose Norm 24 E (in Form von 63 g trockener NC und 34 g Wasser) eingearbeitet und homogenisiert.

Unter Rühren wurden bei 30 °C tropfenweise

189,3 g Wasser zugerührt. Es entstand eine 35 %ige lagerstabile Emulsion mit einem Lösungsmittelgehalt von 20 %.
(Feststoff : Lösungsmittel = 1,75 : 1)
Die Durchlaufzeit betrug im DIN 4 Becher 15,2 sec.

71,5 g der oben erhaltenen Emulsion wurden mit
28,5 g Wasser verrührt.

Es entstand eine 25 %ige Emulsion mit einem Lösungsmittelanteil von 14,3 %.
Diese Emulsion wurde anschließend mittels einer Spritzpistole auf eine Holzoberfläche aufgebracht (3 Spritzgänge à 70 g/m² Emulsion, Trocknungstemperatur 23 °C).
Die Prüfungsbedingungen und die erhaltenen Wasser- und Alkoholbeständigkeiten sind in der Tabelle 1 zusammengefaßt.

Beispiel 4

In eine Lösung von

73,8 g ethoxyliertem Rizinusöl mit einem EO von 33
66,2 g ethoxyliertem Nonylphenol mit einem EO von 12
60,0 g Dibutylphtalat
13,4 g Rizinusöl
272,0 g Butylglykolacetat

wurden

300,0 g Nitrocellulose, Norm 12 E (in Form von 195 g trockener Nitrocellulose und 105 g Wasser) eingearbeitet und bei 30 °C homogenisiert. Anschließend wurde bei langsam laufendem Rührwerk bei 30 °C
10,0 g 10 %ige wässrige NaOH und anschließend
566,0 g Wasser tropfenweise eingerührt.

Es entstand eine 30 %ige lagerstabile Emulsion mit einem Lösungsmittelgehalt von 20 %.
(Feststoff : Lösungsmittel = 1,5 : 1).
Die Durchlaufzeit im DIN-4-Becher betrug 14,8 sec.

50 g der 30 %igen Emulsion wurden mit
50 g Wasser verdünnt.

Es entstand eine 15 %ige Emulsion mit einem Lösungsmittelgehalt von 10 %.
Diese Emulsion wurde anschließend mittels einer Spritzpistole auf eine Lederoberfläche gespritzt (2 Spritzgänge à 50 g/m² Emulsion, Trocknungstemperatur 23 °C).
Die Prüfungsbedingungen und die erhaltenen Naßreibechtheiten sind in der Tabelle 2 zusammengefaßt.

Beispiel 5

In eine Lösung von

18,0 g Diisobutylketon
4,0 g Dioctylphtalat
4,0 g ethoxyliertem Rizinusöl EO = 40

wurden

18,0 g Nitrocellulose, Norm 12 E (in Form von 11,7 g trockener Nitrocellulose und 6,3 Isopropylalkohol) eingearbeitet und homogenisiert. Anschließend wurde mittels eines langsam laufenden Rührwerks bei 30 °C
75,0 g Wasser hineingerührt.

Es entstand eine lagerstabile 20 %ige Emulsion mit 20 % Lösungsmittel (Feststoff : Lösungsmittel = 1 : 1), die eine Durchlaufzeit im DIN-4-Becher von 15,0 sec. besaß.
Diese Emulsion wurde anschließend mittels einer Spritzpistole auf eine Lederoberfläche gespritzt (2

**0 076 443**

Spritzgänge à 50 g/m² Emulsion, Trocknungstemperatur 23 °C).
Die Prüfbedingungen und die erhaltenen Naßreibechtheiten sind in der Tabelle 2 zusammengefaßt.

Beispiel 6

In eine Lösung von

40,0 g ethoxiliertem Rizinusöl mit einem EO = 33
20,0 g Dibutylphtalat
80,0 g Butylglykolacetat wurden
215,4 g Nitrocellulose, Norm 24 E (in Form von 140,0 g trockener NC und 75,4 g Wasser) eingearbeitet
und bei 35 °C homogenisiert. Bei langsam laufendem Rührwerk wurden bei 30 °C tropfenweise
1,5 g 10 %ige wässrige NaOH zugegeben und anschließend bei 30 °C tropfenweise
140,1 g Wasser eingerührt.

Es entstand eine 40 %ige lagerstabile Emulsion mit einem Lösungsmittelanteil von 16 %. Diese emulgatorfreie NC-haltige Emulsion ist entsprechend der gewünschten Anwendung formulierbar.
(Feststoff : Lösungsmittel = 2,5 : 1).
Die Durchlaufzeit betrug im DIN-4-Becher 19,2 sec.

Beispiel 7

Es wurde das Beispiel 1 der DOS 2 203 554 nachgearbeitet, wobei jedoch das angegebene Lösungsmittelgemisch aus 25 Gew.-Teilen Ethylhexylacetat, 25 Gew.-Teile Diisobutylketon und 19 Gew.-Teile Toluol ersetzt durch 18 Gew.-Teile Diisobutylketon, so daß die gleichen Konzentrationsverhältnisse wie im Beispiel 5 erhalten wurden. Mit diesem Versuch soll gezeigt werden, daß die Änderung des Verhältnisses Feststoff zu Lösungsmittel von 1 : 3 auf 1 : 1 mit der dem Stand der Technik bekannten Emulgiertechnik keine lagerstabilen Emulsionen herstellbar sind.

18,0 g Nitrocellulose, Norm 12 E (in Form von 11,7 g trockener Nitrocellulose und 6,3 g Isopropylalkohol)
5,0 g Rizinusöl
4,0 g Dioctylphtalat
4,0 g ethoxyliertes Rizinusöl EO = 40 wurde in
18,0 g Diisobutylketon gelöst. Mittels einer hochtourigen Mischturbine wurden
75,0 g Wasser einemulgiert. Die Temperatur stieg während der Emulgierung auf ca. 65 °C an.

Es entstand eine 20 %ige Emulsion mit 20 % Lösungsmittel, die sofort irreversibel aufrahmte.

Tabelle 1

| Beispiel | 1 | 2 | 3 |
|---|---|---|---|
| Auslaufzeit [1] | 11,8 | 11,8 | 12,3 |
| Wasserbeständigkeit [2] | 0 | 0 | 0 |
| Alkoholbeständigkeit [3] | 0/1 | 0/1 | 0/1 |
| Lagerstabilität | nach 30 Tg.o.B. | nach 30 Tg.o.B. | nach 30 Tg.o.B. |

[1] gemessen : DIN-4-Becher

[2] Prüfung erfolgte nach einwöchiger Lagerung bei 23 °C Belastung mit wassergetränktem Filz, Einwirkungsdauer 1 Stunde.

[3] Entsprechend 2 ; statt Wasser 50 %ige wässrige Ethanollösung.

6

# 0 076 443

Tabelle 2

| Beispiel | 4 | 5 |
|---|---|---|
| Lagerstabilität | nach 30 Tg. o. B. | nach 30 Tg. o. B. |
| Auslaufzeit [1] | 11,8 | 15,0 |
| Naßreibechtheiten [2] | 1000 | 1000 |

[1] gemessen : DIN-4-Becher

[2] Die Prüfung erfolgte nach einer Lagerung der Prüfplatte nach 2 Tagen bei 23 °C. Es wurde ein mit Wasser angefeuchteter Filz (Durchmesser 2,5 cm) unter einer Belastung von 1,00 kg auf dem Überzug gedreht. Beurteilt wurde die Anzahl der Umdrehungen, die der Überzug ohne Lackabrieb überstand.

**Patentansprüche**

1. Verfahren zur Herstellung von lagerstabilen wäßrigen Überzugsmittelemulsionen des Öl-in-Wasser-Typs, deren organische Lösungsmittelkonzentration höchstens 25 % beträgt, auf der Grundlage eines(r) zähflüssigen, cellulosehaltigen Gemisches oder Paste, die aus

a) 5,0-60 Gew.-% Cellulosesubstanz
b) 0,0-55 Gew.-% Harzen
c) 0,5-55 Gew.-% Weichmachern
d) 0,0-20 Gew.-% Emulgatoren
e) 0,0-45 Gew.-% wenigstens eines organischen Lösungsmittels
f) 0,0-30 Gew.-% Wasser

besteht, und wobei die Summe aus a)-f), immer 100 Gew.-% betragen muß, dadurch gekennzeichnet, daß man in das cellulosehaltige Gemisch oder in die Paste, deren Weichmacherkomponente zu 0,5-100 Gew.-% aus wenigstens einem ethoxylierten Weichmacher besteht und deren Verhältnis Feststoff zu organischer Lösungsmittel-Phase größer oder gleich 1 ist, ohne weitere Verdünnung durch ein organisches Lösungsmittel direkt unter Einhaltung von Temperaturen von höchstens 45 °C Wasser in solchen Mengen einarbeitet, daß die Konzentration des organischen Lösungsmittels höchstens 25 % beträgt.

2. Verfahren nach Anspruch 1, dadurch gekennzeichnet, daß man das Wasser tropfenweise zugibt.

3. Verfahren nach Anspruch 1 oder 2, dadurch gekennzeichnet, daß man Temperaturen von höchstens 40 °C einhält.

4. Verfahren nach Anspruch 1-3, dadurch gekennzeichnet, daß das Gemisch oder die Paste aus

a) 15-45 Gew.-% Cellulosesubstanz
b) 0-35 Gew.-% Harzen
c) 1-30 Gew.-% Weichmacher
d) 0-12,5 Gew.-% Emulgatoren
e) 5-35 Gew.-% wenigstens eines organischen Lösungsmittels und
f) 5-25 Gew.-% Wasser besteht.

5. Verfahren nach Ansprüchen 1-4, dadurch gekennzeichnet, daß das Gemisch oder die Paste als Weichmacher Ester von aliphatischen Monocarbonsäuren oder Dicarbonsäure, von aromatischen Dicarbonsäuren, von aliphatischen Tricarbonsäuren, von aromatischen Dicarbonsäuren und von einwertigen Alkoholen mit $C_2$-$C_{10}$, von zweiwertigen Alkoholen mit $C_2$-$C_6$ und dreiwertigen Alkoholen mit $C_3$ oder die Ester von anorganischen Säuren oder Sulfonamiden, Rizinusöl, Leinöl oder ein Alkoxylierungsprodukt der genannten Verbindungen enthält.

7

**0 076 443**

6. Verfahren nach Ansprüchen 1-5, dadurch gekennzeichnet, daß das Gemisch oder die Paste als Weichmacher ethoxyliertes Rizinusöl oder Sojaöl enthält.

7. Verfahren nach Ansprüchen 1-6, dadurch gekennzeichnet, daß das Gemisch oder die Paste als Harze, als organische Lösungsmittel und als Emulgatoren für Nitrolacke übliche Verbindungen enthält.

8. Verfahren nach Ansprüchen 1-7, dadurch gekennzeichnet, daß das Gemisch oder die Paste als organische Lösungsmittel Ethylacetat, Isopropylacetat, Butylacetat, 2-Ethylhexylacetat, Methoxy-n-butylacetat, Ethylglykolacetat, Butylglykolacetat, Aceton, Methylisobutylketon, Diisobutylketon, 2-Cyclohexylhexanon, Methylisoamylketon, Aceton, Butanol oder Isophoron verwendet und als übliche Harze Alkyd-, Maleinsäure-, Phenol-, Formaldehyd-, Xylol- Formaldehyd-, Keton-, Sulfonamid-, Aldehyd-, Amin-, Epoxy-, Carbamidsäure-ester-, Kumaron-Inden-Harze, Ester der Saccharose, Vinyl-, Acrylat- und deren Copolymerisationsharze eingesetzt werden.

9. Verfahren nach Ansprüchen 1-8, dadurch gekennzeichnet, daß das Gemisch oder die Paste als Emulgatoren Dodecylbenzol-, Butylnaphthalinsulfonat, Lauryl-Stearylsulfat, Dioctyldinatriumsuccinat, Octyl- oder Nonylphenoloxethylate mit einem Oxethylierungsgrad von 4 bis 14 enthält.

## Claims

1. Process for the production of storage-stable aqueous surface coating emulsions of the oil-in-water type, the organic solvent concentration of which is at most 25 %, based on a viscous, cellulose-containing mixture or paste consisting of

    a) 5.0-60 % by weight of a cellulose substance,
    b) 0.0-55 % by weight of resins,
    c) 0.5-55 % by weight of plasticisers,
    d) 0.0-20 % by weight of emulsifiers,
    e) 0.0-45 % by weight of at least one organic solvent and
    f) 0.0-30 % by weight of water,

the sum of a)-f) always having to be 100 % by weight, characterised in that water is incorporated directly into the cellulose-containing mixture or into the paste, of which the plasticiser component consists to an extent of 0.5-100 % by weight of at least one ethoxylated plasticiser and of which the ratio of solids to organic solvent phase is greater than or equal to 1, without any further dilution with an organic solvent, while maintaining temperatures of at most 45 °C, in such quantities that the concentration of the organic solvent is at most 25 %.

2. Process according to Claim 1, characterised in that the water is added dropwise.

3. Process according to Claim 1 or 2, characterised in that temperatures of at most 40 °C are maintained.

4. Process according to Claim 1-3, characterised in that the mixture or the paste consists of

    a) 15-45 % by weight of a cellulose substance,
    b) 0-35 % by weight of resins,
    c) 1-30 % by weight of a plasticiser,
    d) 0-12.5 % by weight of emulsifiers,
    e) 5-35 % by weight of at least one organic solvent and
    f) 5-25 % by weight of water.

5. Process according to Claims 1-4, characterised in that the mixture or the paste contains, as the plasticisers, esters of aliphatic monocarboxylic acids or dicarboxylic acid, of aromatic dicarboxylic acids, of aliphatic tricarboxylic acids, of aromatic dicarboxylic acids and of monohydric alcohols with $C_2$-$C_{10}$, of dihydric alcohols with $C_2$-$C_6$ and trihydric alcohols with $C_3$ or the esters of inorganic acids or sulphonamides, castor oil, linseed oil or an alkoxylation product of the above mentioned compounds.

6. Process according to Claims 1-5, characterised in that the mixture or the paste contains ethoxylated castor oil or soybean oil as the plasticiser.

7. Process according to Claims 1-6, characterised in that the mixture or the paste contains as resins, as organic solvents and as emulsifiers compounds customary for cellulose nitrate lacquers.

8. Process according to Claims 1-7, characterised in that the mixture or the paste uses ethyl acetate, isopropyl acetate, butyl acetate, 2-ethyl hexyl acetate, methoxy-n-butyl acetate, ethyl glycol acetate, butyl glycol acetate, acetone, methyl isobutylketone, diisobutyl ketone, 2-cyclohexyl hexanone, methyl isoamyl ketone, acetone, butanol or isophorone as the organic solvents and alkyd, maleic acid, phenolic, formaldehyde, xylene, formaldehyde, ketone, sulphonamide, aldehyde, amine, epoxy, carbanic acid ester or coumarone-indene resins, esters of sucrose, or vinyl, acrylate or copolymerisation resins thereof are used as the customary resins.

9. Process according to Claims 1-8, characterised in that the mixture or the paste contains, as emulsifiers, dodecylbenzene or butylnaphthalene sulphonate, lauryl or stearyl sulphate, dioctyl disodium succinate, or octyl or nonyl phenol ethoxylates with a degree of ethoxylation of 4 to 14.

**Revendications**

1. Procédé de fabrication d'émulsions aqueuses stables au stockage d'agents de revêtement, du type huile-dans-l'eau, dont la concentration en solvant organique atteint au plus 25 % et à base d'un mélange ou pâte visqueux contenant de la cellulose, consistant en

a) 5,0 à 60 % en poids de substance cellulosique
b) 0,0 à 55 % en poids de résines
c) 0,5 à 55 % en poids de plastifiants
d) 0,0 à 20 % en poids d'émulsifiants
e) 0,0 à 45 % en poids d'au moins un solvant organique
f) 0,0 à 30 % en poids d'eau,

la somme de a)-f) devant toujours s'élever à 100 % en poids, caractérisé en ce que dans le mélange ou la pâte renfermant de la cellulose, dont le composant plastifiant consiste en 0,5 à 100 % en poids d'au moins un plastifiant éthoxylé et dont le rapport matière sèche/phase de solvant organique est supérieur ou égal à 1, sans dilution ultérieure à l'aide d'un solvant organique, on incorpore directement, tout en maintenant des températures atteignant au plus 45 °C, de l'eau en des quantités pour que la concentration du solvant organique atteigne au plus 25 %.

2. Procédé selon la revendication 1, caractérisé en ce qu'on ajoute l'eau goutte à goutte.

3. Procédé selon la revendication 1 ou 2, caractérisé en ce qu'on maintient des températures atteignant au plus 40 °C.

4. Procédé selon les revendications 1 à 3, caractérisé en ce que le mélange ou la pâte consiste en

a) 15 à 45 % en poids de substance cellulosique
b) 50 à 35 % en poids de résines
c) 1 à 30 % en poids de plastifiant
d) 0 à 12,5 % en poids d'émulsifiants
e) 5 à 35 % en poids d'au moins un solvant organique et
f) 5 à 25 % en poids d'eau.

5. Procédé selon les revendications 1 à 4, caractérisé en ce que le mélange ou la pâte contient comme plastifiant des esters d'acides monocarboxyliques ou d'acides dicarboxyliques aliphatiques, d'acides dicarboxyliques aromatiques, d'acides tricarboxyliques aliphatiques, d'acides dicarboxyliques aromatiques et d'alcools monovalents en $C_2$-$C_{10}$, d'alcools divalents en $C_2$-$C_6$ et d'alcools trivalents en $C_3$ ou des esters d'acides minéraux ou des sulfonamides, de l'huile de ricin, de l'huile de lin ou un produit d'alcoxylation des composés cités.

6. Procédé selon les revendications 1 à 5, caractérisé en ce que le mélange ou la pâte contient comme plastifiant de l'huile de ricin ou de l'huile de soya éthoxylée.

7. Procédé selon les revendications 1 à 6, caractérisé en ce que le mélange ou la pâte contient comme résines, comme solvants organiques et comme émulsifiants les composés en usage pour les nitro-vernis.

8. Procédé selon les revendications 1 à 7, caractérisé en ce que le mélange ou la pâte utilise comme solvants organiques de l'acétate d'éthyle, acétate d'isopropyle, acétate de butyle, acétate de 2-éthylhexyle, acétate de méthoxy-n-butyle, acétate d'éthylglycol, acétate de butylglycol, acétone, méthylisobutylcétone, diisobutylcétone, 2-cyclohexylhexanone, méthylisoamylcétone, acétone, butanol ou isophorone et en ce qu'on utilise comme résines usuelles des résines alkydes, maléiques, phénoliques, formaldéhydiques, de xylène-formaldéhyde, cétoniques, de sulfonamides, d'aldéhydes, d'amines, époxy, d'esters carbamiques, de coumarone-indène, des esters de saccharose, des résines vinyliques, acryliques et de leurs copolymères.

9. Procédé selon les revendications 1 à 8, caractérisé en ce que le mélange ou la pâte contient comme émulsifiants du dodécylbenzène-, du butylnaphtalène-sulfonate, du lauryl- et du stéarylsulfate, du dioctylsuccinate disodique, des octyl- ou nonylphénol-oxéthylates ayant un degré d'oxyéthylation de 4 à 14.